(19) Europäisches Patentamt
European Patent Office
Office européen des brevets

(11) **EP 4 435 174 A1**

(12) **EUROPEAN PATENT APPLICATION**
published in accordance with Art. 153(4) EPC

(43) Date of publication:
**25.09.2024 Bulletin 2024/39**

(21) Application number: **22892911.3**

(22) Date of filing: **11.11.2022**

(51) International Patent Classification (IPC):
*D06M 15/693* (2006.01)     *B60C 9/00* (2006.01)
*C09J 11/06* (2006.01)     *C09J 109/00* (2006.01)
*D06M 13/17* (2006.01)     *D06M 13/395* (2006.01)
*D06M 15/55* (2006.01)

(52) Cooperative Patent Classification (CPC):
**B60C 9/00; C09J 11/06; C09J 109/00;
D06M 13/17; D06M 13/395; D06M 15/55;
D06M 15/693**

(86) International application number:
**PCT/JP2022/042148**

(87) International publication number:
**WO 2023/085413 (19.05.2023 Gazette 2023/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2021 JP 2021185938**

(71) Applicant: **Kuraray Co., Ltd.**
**Kurashiki-shi, Okayama 710-0801 (JP)**

(72) Inventors:
• **ASADA, Toru**
  **Okayama-shi, Okayama 702-8601 (JP)**
• **ISHIDA, Eiichi**
  **Okayama-shi, Okayama 702-8601 (JP)**
• **WASHITAKE, Yosuke**
  **Okayama-shi, Okayama 702-8601 (JP)**

(74) Representative: **Müller-Boré & Partner**
**Patentanwälte PartG mbB**
**Friedenheimer Brücke 21**
**80639 München (DE)**

(54) **AQUEOUS ADHESIVE, REINFORCEMENT FIBERS USING SAME, AND ELASTOMER PRODUCT USING REINFORCEMENT FIBERS**

(57)     An aqueous adhesive using an adhesive component that does not contain resorcin and formalin, particularly an aqueous adhesive that is excellent in adhesiveness to fibers and an elastomer and can suppress process contamination in a process of producing reinforcing fibers, reinforcing fibers using the same, and an elastomer product using the reinforcing fibers are provided. An aqueous adhesive for adhesion between fibers and an elastomer includes: an oil-in-water emulsion (A) containing a liquid conjugated diene-based rubber and a surfactant, and an aqueous solution or aqueous dispersion (B) of a crosslinking agent.

EP 4 435 174 A1

**Description**

Technical Field

The present invention relates to an aqueous adhesive for adhesion between fibers and an elastomer, reinforcing fibers using the same, and an elastomer product using the reinforcing fibers.

Background Art

In industrial rubber products, such as a tire, a conveyor belt, and a hose (e.g., automotive hydraulic brake hose), synthetic fibers, such as vinylon and rayon, or natural fibers, such as cotton are generally used for reinforcement. In the products, for sufficiently exerting excellent physical characteristics (for example, high strength and high elastic modulus) and the like of rubber, firm adhesion between the fibers and the rubber is necessary. Conventionally, as a method therefor, a method using an adhesive referred to as RFL containing a resorcin-formalin resin and a rubber latex as major components is widely known (PTLs 1 and 2).

However, since formalin is suspected of being a carcinogen, and resorcin is suspected of being an endocrine disruptor, it is desirable to develop an alternate material.

PTL 3 proposes as the alternative material reinforcing fibers that use a liquid conjugated diene-based rubber having a hydrogen bonding functional group, do not use resorcin and formaldehyde, and are excellent in adhesiveness to rubber. PTL 4 proposes a method for adhering fibers to rubber using a thermosetting resin having an unsaturated carbon bond.

Citation List

Patent Literature

PTL 1: JP 54-4976 A
PTL 2: JP 58-2370 A
PTL 3: WO 2019/230700
PTL 4: JP 2016-502610 T

Summary of Invention

Technical Problem

In a method described in PTL 3, a certain extent of adhesion force is achieved, but further improvement is desirable. A viscous liquid on reinforcing fibers may contaminate a production line during processing a woven fabric or a knitted fabric.

On the other hand, PTL 4 proposes a method for producing reinforcing fibers by curing an isocyanate compound or epoxy compound having an unsaturated bond on fibers. This method uses an organic solvent, and therefore the method has a problem in which a burden on the work environment is high. In addition, since an operation for forming an adhesive layer is complicated and a long treatment time is required, the method is inferior in productivity.

Accordingly, there has been a need for reinforcing fibers that have an adhesion force the same as that in a conventional method using RFL and less process contamination during processing, and are excellent in production efficiency.

The present invention is made in view of the above-described problems. An object of the present invention is to provide an aqueous adhesive using an adhesive component that does not contain resorcin and formalin, particularly an aqueous adhesive that is excellent in adhesiveness to fibers and an elastomer and can suppress process contamination in a process of producing reinforcing fibers, reinforcing fibers using the same, and an elastomer product using the reinforcing fibers.

Solution to Problem

The present inventors have intensively investigated to achieve the object, and as a result, found that when a liquid conjugated diene-based rubber and a crosslinking agent are used in combination, the liquid conjugated diene-based rubber is less likely to be absorbed into an elastomer that is an adhesion object even at high temperature in vulcanization, and excellent adhesiveness is exhibited. However, mixing the liquid conjugated diene-based rubber with the crosslinking agent, such as an epoxy resin, advances a reaction, and therefore there are problems in which long-term storage is difficult and adhesiveness reduces.

The inventors have further investigated, found that when an oil-in-water emulsion is formed from the liquid conjugated diene-based rubber, and then mixed with an aqueous solution or aqueous dispersion of the crosslinking agent, an aqueous adhesive that can be stored for an extended period of time and exhibits excellent adhesiveness is obtained, and process contamination in production of reinforcing fibers is suppressed, and completed the present invention.

The present invention relates to the following items [1] to [11].

[1] An aqueous adhesive for adhesion between fibers and an elastomer, the aqueous adhesive including: an oil-in-water emulsion (A) containing a liquid conjugated diene-based rubber and a surfactant, and an aqueous solution or aqueous dispersion (B) of a crosslinking agent.
[2] The aqueous adhesive according to the item [2], in which a melt viscosity measured at 38°C of the liquid conjugated diene-based rubber is 4,000 Pa s or less.
[3] The aqueous adhesive according to the item [1] or [2], further including an oil having a vapor pressure at 20°C of 10 Pa or less.
[4] The aqueous adhesive according to the item [3], in which the oil is contained in the oil-in-water emulsion (A).
[5] The aqueous adhesive according to any one of the items [1] to [4], in which the crosslinking agent is at least one kind selected from an epoxy resin and an isocyanate resin.
[6] The aqueous adhesive according to any one of the items [1] to [5], in which a content of an organic solvent in the aqueous adhesive is less than 1.0% by mass.
[7] Reinforcing fibers in which the aqueous adhesive according to any one of the items [1] to [6] are attached to fibers.
[8] The reinforcing fibers according to the item [7], in which the fibers are at least one kind of fibers selected from polyamide-based fibers, polyvinyl alcohol-based fibers, polyester-based fibers, and regenerated cellulose-based fibers.
[9] The reinforcing fibers according to the item [7] or [8], in which an amount of the aqueous adhesive attached to the fibers is 0.01 to 10 parts by mass per 100 parts by mass of the fibers used as a raw material.
[10] An elastomer product using the reinforcing fibers according to any one of the items [7] to [9].
[11] The elastomer product according to the item [10], in which the elastomer product is a tire, a belt, or a hose.

Advantageous Effects of Invention

The present invention can provide an aqueous adhesive using an adhesive component that does not contain resorcin and formalin, particularly an aqueous adhesive that is excellent in adhesiveness to fibers and an elastomer and can suppress process contamination in a process of producing reinforcing fibers, reinforcing fibers using the same, and an elastomer product using the reinforcing fibers.

Description of Embodiments

[Aqueous Adhesive]

An aqueous adhesive of the present invention is an aqueous adhesive for adhesion between fibers and an elastomer, the aqueous adhesive including an oil-in-water emulsion (A) containing a liquid conjugated diene-based rubber and a surfactant, and an aqueous solution or aqueous dispersion (B) of a crosslinking agent.

In the aqueous adhesive of the present invention, the oil-in-water emulsion (A) containing the liquid conjugated diene-based rubber, and the crosslinking agent are used in combination, and therefore the liquid conjugated diene-based rubber is less likely to be absorbed into the elastomer that is an adhesion object even at high temperature in vulcanization, and the aqueous adhesive exhibits excellent adhesiveness. The liquid conjugated diene-based rubber is in the form of an emulsion, and therefore the liquid conjugated diene-based rubber can be stored for an extended period of time even in the coexistence of the crosslinking agent. In addition, the liquid conjugated diene-based rubber and the crosslinking agent can be used in a one-part formulation, and therefore a burden on the environment is reduced, and the space for a manufacturing facility can be reduced. The adherence on a fiber surface is lower than an adhesive using the liquid conjugated diene-based rubber alone, and therefore process contamination in a process of producing reinforcing fibers is reduced, to improve production efficiency. Hereinafter, the present invention will be described in detail.

<Oil-In-Water Emulsion (A)>

The oil-in-water emulsion (A) in the present invention contains the liquid conjugated diene-based rubber and the surfactant.

[Liquid Conjugated Diene-Based Rubber]

The liquid conjugated diene-based rubber used in the present invention has at least a monomer unit derived from a conjugated diene (which may be hereinafter referred to as a "conjugated diene unit") in the molecule thereof. Specifically, the amount of the monomer unit derived from a conjugated diene is preferably 50% by mole or more, and more preferably 65% by mole or more based on the total monomer units in the conjugated diene-based rubber.

In the description herein, the "liquid" of the liquid conjugated diene-based rubber means that the melt viscosity of the conjugated diene-based rubber measured at 38°C is 4,000 Pa·s or less. The melt viscosity is preferably 0.1 Pa·s or more, more preferably 1 Pa·s or more, further preferably 10 Pa·s or more, still further preferably 30 Pa·s or more, and still more further preferably 50 Pa·s or more, from the standpoint of the enhancement of the adhesiveness, and is preferably 2,500 Pa·s or less, and more preferably 2,100 Pa·s or less, from the standpoint of the handleability. In the case where the melt viscosity is in the range, a favorable handleability can be obtained while enhancing the adhesiveness of the liquid conjugated diene-based rubber.

The melt viscosity of the liquid conjugated diene-based rubber means a viscosity that is measured at 38°C with a Brookfield viscometer (B type viscometer).

Examples of the conjugated diene monomer include butadiene, 2-methyl-1,3-butadiene (which may be hereinafter referred to as "isoprene"), 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, chloroprene, β-farnesene (which may be hereinafter referred to as "farnesene"), and myrcene. One kind of the conjugated diene may be used alone, or two or more kinds thereof may be used in combination.

The liquid conjugated diene-based rubber used in the present invention more preferably has a monomer unit derived from one or more kind selected from butadiene, isoprene, and farnesene, from the standpoint of the reactivity in vulcanization.

The liquid conjugated diene-based rubber used in the present invention may have a unit derived from an additional monomer other than the conjugated diene monomer in such an extent that does not impair the adhesion. Examples of the additional monomer include an ethylenic unsaturated monomer and an aromatic vinyl compound that can be copolymerized.

Examples of the ethylenic unsaturated monomer include an olefin, such as ethylene, 1-butene, isobutylene, and acrylonitrile.

Examples of the aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, and divinylbenzene. One kind thereof may be used alone, or two or more kinds thereof may be used in combination.

Among these, from the standpoint of the increase in the polarity of the liquid conjugated diene-based rubber and the enhancement of the compatibility with the fibers, the liquid conjugated diene-based rubber preferably has a monomer unit derived from acrylonitrile.

In the case where the liquid conjugated diene-based rubber has a monomer unit derived from the additional monomer other than the conjugated diene monomer, the content thereof is preferably 1 to 50% by mole, more preferably 10 to 40% by mole, and further preferably 15 to 35% by mole.

The liquid conjugated diene-based rubber used in the present invention may be a modified liquid conjugated diene-based rubber having a hydrogen bonding functional group in a part of the liquid conjugated diene-based rubber. The modified liquid conjugated diene-based rubber is preferably a modified liquid conjugated diene-based rubber that has a conjugated diene unit in at least a part of the polymer chain and has a hydrogen bonding functional group in a side chain or terminal of the polymer chain.

In the case where the modified liquid conjugated diene-based rubber is used as the liquid conjugated diene-based rubber, the modified liquid conjugated diene-based rubber can interact with each of the elastomer and the rubber and the fibers as adherends, so as to adhere the adherends. In the case where the modified liquid conjugated diene-based rubber and the adherend rubber are vulcanized to form covalent bonding, the adhesiveness is enhanced through the formation of strong cohesion force.

It is also considered that the hydrogen bonding functional group contained in the modified liquid conjugated diene-based rubber forms a hydrogen bond to the fiber surface, so as to enhance the adhesiveness.

The "hydrogen bond" referred in the description herein means a bonding interaction to be formed between a hydrogen atom (donor) that is bonded to an atom having a large electronegativity (e.g., O, N, and S) and is polarized to be electrically positive, and an electrically negative atom (acceptor) having a lone electron pair.

In the present invention, the "hydrogen bonding functional group" is a functional group that can function as a donor and an acceptor in the hydrogen bond. Specific examples thereof include a hydroxy group, an epoxy group, an ether group, a mercapto group, a carbonyl group, a carboxy group, an aldehyde group, an amino group, an imino group, an imidazole group, a urethane group, an amide group, a urea group, an isocyanate group, a silanol group, and derivatives thereof. Examples of the derivative of a carboxy group include a salt thereof, an esterified form thereof, an amidated form thereof, and an acid anhydride thereof. Examples of the carboxy group include a group derived from a monocarboxylic acid and a group derived from a dicarboxylic acid. Examples of the derivative of an aldehyde group include an acetalized form thereof. Examples of the derivative of a silanol group include an esterified form thereof. Among these, one or more kind selected from a hydroxy group, an epoxy group, a mercapto group, a carbonyl group, a carboxy group, a salt of a carboxy group, an esterified form of a carboxy group, an acid anhydride of a carboxy group, an aldehyde group, an acetalized form of an aldehyde group, a silanol group, an esterified form of a silanol group, an amino group, and an imidazole group is preferred.

Among the hydrogen bonding functional groups, one or more kind selected from a hydroxy group, a carbonyl group, a carboxy group, a salt of a carboxy group, an esterified form of a carboxy group, and an acid anhydride of a carboxy group is preferred, one or more kind selected from a carboxy group, an esterified form of a carboxy group, and an acid anhydride of a carboxy group is more preferred, and functional groups derived from an esterified form of maleic anhydride and maleic anhydride are further preferred, from the standpoint of the enhancement of the adhesiveness and the standpoint of the production easiness of the liquid conjugated diene-based rubber.

The number of the hydrogen bonding functional group in the modified liquid conjugated diene-based rubber in terms of average per one molecule is preferably 1 or more, more preferably 1.5 or more, and further preferably 2 or more, from the standpoint of the achievement of the reinforcing fibers excellent in adhesiveness to rubber. The number of the hydrogen bonding functional group in terms of average per one molecule is preferably 80 or less, more preferably 40 or less, further preferably 25 or less, and still further preferably 15 or less, from the standpoint of the enhancement of the handleability by controlling the viscosity of the modified liquid conjugated diene-based rubber to a suitable range.

The average number of the hydrogen bonding functional group per one molecule of the modified liquid conjugated diene-based rubber is calculated from the equivalent (g/eq) of the hydrogen bonding functional group of the modified liquid conjugated diene-based rubber and the styrene conversion number average molecular weight Mn thereof, according to the following expression. The equivalent of the hydrogen bonding functional group of the modified liquid conjugated diene-based rubber means the mass of the conjugated diene and the additional monomer contained depending on necessity other than the conjugated diene, bonded to one hydrogen bonding functional group.

Average number if hydrogen bonding functional group per one molecule = [(number average molecular weight (Mn))/(molecular weight of styrene unit) $\times$ (average molecular weight of conjugated diene and additiona monomer unit contained depending on necessity other than conjugated diene)]/(equivalent of hydrogen bonding functional group)

A method for calculating the equivalent of the hydrogen bonding functional group may be appropriately selected depending on the kind of the hydrogen bonding functional group.

Examples of the method for producing the modified liquid conjugated diene-based rubber include a method of adding a modifying compound to a polymerization product of a conjugated diene monomer (which may be hereinafter referred to as a "production method (1)"), a method of oxidizing a conjugated diene polymer (which may be hereinafter referred to as a "production method (2)"), a method of copolymerizing a conjugated diene monomer and a radically polymerizable compound having a hydrogen bonding functional group (which may be hereinafter referred to as a "production method (3)"), and a method of adding a modifying compound capable of reacting with the polymerization active end of a polymerization product of an unmodified conjugated diene monomer having a polymerization active end, to the polymerization product, before adding a polymerization terminator thereto (which may be hereinafter referred to as a "production method (4)"). Among these, from the standpoint of productivity, the modified liquid conjugated diene-based rubber is preferably produced by the production method (1), (2), or (3), more preferably produced by the production method (1) or (3), and further preferably produced by the production method (1).

The production method (1) is a method of adding a modifying compound to a polymerization product of a conjugated diene monomer, i.e., a liquid conjugated diene-based rubber having not been modified (which may be hereinafter referred to as an "unmodified liquid conjugated diene-based rubber").

The unmodified liquid conjugated diene-based rubber can be prepared by polymerizing a conjugated diene, and depending on necessity an additional monomer other than the conjugated diene, for example, by an emulsion polymerization method, a solution polymerization method, or the like.

A known method or a method equivalent to the known method may be applied to the solution polymerization method. For example, a prescribed amount of a monomer containing a conjugated diene is polymerized in a solvent with a Ziegler-based catalyst, a metallocene-based catalyst, or an active metal or an active metal compound capable of performing anion polymerization, in the presence of a polar compound depending on necessity.

Examples of the solvent include an aliphatic hydrocarbon, such as n-butane, n-pentane, isopentane, n-hexane, n-heptane, and isooctane; an alicyclic hydrocarbon, such as cyclopentane, cyclohexane, and methylcyclopentane; and an aromatic hydrocarbon, such as benzene, toluene, and xylene.

Examples of the active metal capable of performing anion polymerization include an alkali metal, such as lithium, sodium, and potassium; an alkaline earth metal, such as beryllium, magnesium, calcium, strontium, and barium; and a lanthanoid series rare earth metal, such as lanthanum and neodymium. In the active metal capable of performing anion polymerization, an alkali metal and an alkaline earth metal are preferred, and an alkali metal is more preferred.

The active metal compound capable of performing anion polymerization is preferably an organic alkali metal compound. Examples of the organic alkali metal compound include an organic monolithium compound, such as methyllithium, ethyllithium, n-butyllithium, sec-butyllithium, t-butyllithium, hexyllithium, phenyllithium, and stilbenelithium; a polyfunctional organic lithium compound, such as dilithiomethane, dilithionaphthalene, 1,4-dilithiobutane, 1,4-dilithio-2-ethylcyclohexane, and 1,3,5-trilithiobenzene; sodium naphthalene, and potassium naphthalene. In the organic alkali metal compound, an organic lithium compound is preferred, and an organic monolithium compound is more preferred.

The amount of the organic alkali metal compound used may be appropriately determined depending on the melt viscosity, the molecular weight, and the like of the target unmodified liquid conjugated diene-based rubber and the target modified liquid conjugated diene-based rubber, and the organic alkali metal compound is generally used in an amount of 0.01 to 3 parts by mass per 100 parts by mass in total of the monomer containing the conjugated diene.

The organic alkali metal compound may be used in the form of an organic alkali metal amide after reacting with a secondary amine, such as dibutylamine, dihexylamine, or dibenzylamine.

The polar compound is generally used for preventing the reaction from being deactivated in the anionic polymerization and for regulating the microstructure of the conjugated diene moiety. Examples of the polar compound include an ether compound, such as dibutyl ether, tetrahydrofuran, ethylene glycol diethyl ether, and 2,2-di(2-tetrahydrofuryl)propane; a tertiary amine, such as tetramethylethylenediamine and trimethylamine; an alkali metal alkoxide, and a phosphine compound. The polar compound is generally used in an amount of 0.01 to 1,000 mol based on the organic alkali metal compound.

The temperature of the solution polymerization is generally in a range of -80 to 150°C, preferably in a range of 0 to 100°C, and more preferably in a range of 10 to 90°C. The polymerization mode may be any of a batch system or a continuous system.

The polymerization reaction can be terminated by adding a polymerization terminator. Examples of the polymerization terminator include an alcohol, such as methanol and isopropanol. The unmodified liquid conjugated diene-based rubber can be isolated by pouring the resulting polymerization reaction liquid to a poor solvent, such as methanol, to deposit the polymerization product, or by washing the polymerization reaction liquid with water, followed by isolating and drying.

The method for producing the unmodified liquid conjugated diene-based rubber is preferably the solution polymerization method among the above.

A known method or a method equivalent to the known method may be applied to the emulsion polymerization method. For example, a prescribed amount of a monomer containing a conjugated diene is emulsified and dispersed in the presence of an emulsifier and subjected to emulsion polymerization in the presence of a radical polymerization initiator.

Examples of the emulsifier include a long-chain fatty acid salt having 10 or more carbon atoms, and a rosin acid salt. Examples of the long-chain fatty acid salt include a potassium salt or a sodium salt of a fatty acid, such as capric acid, lauric acid, myristic acid, palmitic acid, oleic acid, and stearic acid.

A dispersion solvent used is generally water, and may contain a water soluble organic solvent, such as methanol or ethanol, within a range that does not impair the stability during the polymerization.

Examples of the radical polymerization initiator include a persulfate, such as ammonium persulfate and potassium persulfate, an organic peroxide, and hydrogen peroxide.

A chain transfer agent may be used for controlling the molecular weight of the resulting unmodified liquid conjugated diene-based rubber. Examples of the chain transfer agent include a mercaptan compound, such as t-dodecylmercaptan and n-dodecylmercaptan; carbon tetrachloride, thioglycolic acid, diterpene, terpinolene, $\gamma$-terpinene, and $\alpha$-methylstyrene dimer.

The temperature of the emulsion polymerization may be appropriately determined depending on the kind of the radical polymerization initiator used and the like, and is generally in a range of 0 to 100°C, and preferably in a range of 0 to 60°C. The polymerization mode may be any of continuous polymerization and batch polymerization.

The polymerization reaction can be terminated by adding a polymerization terminator. Examples of the polymerization terminator include an amine compound, such as isopropylhydroxylamine, diethylhydroxylamine, and hydroxylamine; a quinone-based compound, such as hydroquinone and benzoquinone, and sodium nitrite.

After terminating the polymerization reaction, an antiaging agent may be added depending on necessity. After terminating the polymerization reaction, the unreacted monomer is removed from the resulting latex depending on necessity, and then a salt, such as sodium chloride, calcium chloride, or potassium chloride, is added as a coagulant, while adding an acid, such as nitric acid or sulfuric acid, for controlling the pH of the coagulation system to a prescribed value depending on necessity, so as to coagulate the polymerization product, from which the dispersion solvent is removed to recover the polymerization product. Subsequently, the polymerization product is washed with water, dehydrated, and then dried to provide the unmodified liquid conjugated diene-based rubber. In the coagulation, depending on necessity, the latex may be mixed in advance with an extension oil in the form of an emulsion dispersion liquid, so as to recover the extended unmodified liquid conjugated diene-based rubber.

The modifying compound used in the production method (1) is not particularly limited, and is preferably a compound having a hydrogen bonding functional group from the standpoint of the enhancement of the adhesiveness of the reinforcing fibers. Examples of the hydrogen bonding functional group include the same ones as described above. Among these, an amino group, an imidazole group, a urea group, a hydroxy group, an epoxy group, a mercapto group, a silanol group, an aldehyde group, a carboxy group, and derivatives thereof are preferred from the standpoint of the strength of the hydrogen bonding force. The derivative of a carboxy group is preferably a salt thereof, an esterified form thereof, an amidated form thereof, or an acid anhydride thereof. One kind of the modifying compound having a hydrogen bonding functional group may be used alone, or two or more kinds thereof may be used in combination.

Examples of the modifying compound include an unsaturated carboxylic acid, such as maleic acid, fumaric acid, citraconic acid, and itaconic acid; an unsaturated carboxylic acid anhydride, such as maleic anhydride, citraconic anhydride, 2,3-dimethylmaleic anhydride, and itaconic anhydride; an unsaturated carboxylate ester, such as a maleate ester, a fumarate ester, a citraconate ester, and an itaconate ester; an unsaturated carboxylic acid amide, such as maleic acid amide, fumaric acid amide, citraconic acid amide, and itaconic acid amide; an unsaturated carboxylic acid imide, such as maleic acid imide, fumaric acid imide, citraconic acid imide, and itaconic acid imide; and a silane compound, such as vinyltrimethoxysilane, γ-methacryloxypropyltrimethoxysilane, mercaptomethylmethyldiethoxysilane, mercaptomethyltriethoxysilane, 2-mercaptoethyltrimethoxysilane, 2-mercaptoethyltriethoxysilane, 2-mercaptoethylmethoxydimethylsilane, 2-mercaptoethylethoxydimethylsilane, 3-mercaptopropyltrimethoxysilane, 3-mercaptopropyltriethoxysilane, 3-mercaptopropyldimethoxymethylsilane, 3-mercaptopropyldiethoxymethylsilane, 3-mercaptopropyldimethoxyethylsilane, 3-mercaptopropyldiethoxyethylsilane, 3-mercaptopropylmethoxydimethylsilane, and 3-mercaptopropylethoxydimethylsilane.

The amount of the modifying compound used is preferably 0.1 to 100 parts by mass, more preferably 0.5 to 50 parts by mass, and further preferably 1 to 30 parts by mass, per 100 parts by mass of the unmodified liquid conjugated diene-based rubber.

The reaction temperature is generally preferably in a range of 0 to 200°C, and more preferably in a range of 50 to 200°C.

After the modifying compound is grafted to the unmodified liquid conjugated diene-based rubber to introduce a hydrogen bonding functional group thereinto, a modifying compound capable of further reacting with the functional group may be added to introduce another hydrogen bonding functional group into the polymer. Specific examples include a method of grafting a maleic anhydride to an unmodified liquid conjugated diene-based rubber prepared through living anion polymerization, and then reacting a compound, such as a compound having a hydroxy group, e.g., 2-hydroxyethyl methacrylate and methanol, or water.

The amount of the modifying compound added to the modified liquid conjugated diene-based rubber is preferably 0.5 to 40 parts by mass, more preferably 1 to 30 parts by mass, and further preferably 1.5 to 20 parts by mass, per 100 parts by mass of the unmodified liquid conjugated diene-based rubber. The amount of the modifying compound added to the modified liquid conjugated diene-based rubber can be calculated based on the acid value of the modifying compound, or can also be determined using various analyzers for infrared spectrometry, nuclear magnetic resonance spectrometry, or the like.

The method of adding the modifying compound to the unmodified liquid conjugated diene-based rubber is not particularly limited, and examples thereof include a method of adding one or more kind of the modifying compound selected from the unsaturated carboxylic acid, the unsaturated carboxylic acid derivative, the silane compound, and the like and depending on necessity, a radical generator, to the unmodified liquid conjugated diene-based rubber, and heating the mixture in the presence or absence of an organic solvent. The radical generator used is not particularly limited, and may be an organic peroxide, an azo compound, hydrogen peroxide, and the like, which are ordinarily commercially available.

Examples of the organic solvent used in the method generally include a hydrocarbon solvent and a halogenated hydrocarbon solvent. Among these organic solvents, a hydrocarbon solvent, such as n-butane, n-hexane, n-heptane, cyclohexane, benzene, toluene, and xylene, is preferred.

An antiaging agent may be added in performing the reaction of adding the modifying compound in the aforementioned method from the standpoint of the prevention of side reaction. Examples of the antiaging agent include a phenol-based antiaging agent, such as 2,6-dibutyl-4-methylphenol (BHT), 2,2'-methylenebis(4-methyl-6-t-butylphenol), 4,4'-thiobis(3-methyl-6-t-butylphenol), 4,4'-butylidenebis(3-methyl-6-t-butylphenol) (AO-40), 3,9-bis[1,1-dimethyl-2-[3-(3-t-butyl-4-hydroxy-5-methylphenyl)propionyloxy]ethyl]-2,4,8,10-tetraoxaspiro[5.5]undecane (AO-80), 2,4-bis(octylthiomethyl)-6-methylphenol (Irganox 1520L), 2,4-bis[(dodecylthio)methyl]-6-methylphenol (Irganox 1726), 2-[1-(2-hydroxy-3,5-dit-pentylphenyl)ethyl]-4,6-dipentylphenyl acrylate (Sumilizer GM), hydroquinone, and p-methoxyphenol; a phosphoric acid-based antiaging agent, such as tris(2,4-dibutylphenyl) phosphite (Irganox 168); an amine-based antiaging agent, such as N-phenyl-N'-(1,3-dimethylbutyl)-p-phenylenediamine (Nocrac 6C), bis(2,2,6,6-tetramethyl-4-pyperidyl) sebacate (LA-77Y), N,N-dioctadecylhydroxylamine (Irgastab FS042), and bis(4-t-octylphenyl)amine (Irganox 5057); a sulfur-based antiaging agent, such as dioctadecyl 3,3'-dithiobispropionate, didodecyl-3,3'-thiodipropionate (Irganox PS800), and 2,2-bis[3-(dodecylthio)-1-oxopropyloxy]methyl]-1,3-propandiyl bis[3-(dodecylthio)propionate (Mumilizer TP-D); and a composite antiaging agent of a phenol-based antiaging agent, such as 6-t-butyl-[3-(2,4,8,10-tetrat-butyldibenzo[d,f][1,3,2]dioxaphosphepin-6-yloxy)propyl]-methylphenol (Sumilizer GP), and a phosphoric acid-based antiaging agent. One kind of the antiaging agent may be used alone, or two or more kinds thereof may be used in combination.

Among these, 2,6-dibutyl-4-methylphenol, N-phenyl-N'-(1,3-dimethylbutyl)-p-phenylenediamine (Nocrac 6C), or the like is preferably used from the standpoint of the effects and the versatility.

The amount of the antiaging agent added is preferably 0.01 to 10 parts by mass, more preferably 0.05 to 5 parts by mass, per 100 parts by mass of the unmodified liquid conjugated diene-based rubber. In the case where the amount of the antiaging agent added is in the range, a side reaction can be suppressed to provide the modified liquid conjugated diene-based rubber with high yield.

[Physical Properties of Liquid Conjugated Diene-based Rubber]

The weight average molecular weight (Mw) of the liquid conjugated diene-based rubber is not particularly limited, is preferably more than 1,000, more preferably 2,000 or more, further preferably 3,000 or more, still further preferably 5,000 or more, and still more further preferably 20,000 or more, from the standpoint of the enhancement of the adhesiveness, and is preferably 120,000 or less, more preferably 100,000 or less, further preferably 75,000 or less, and still further preferably 55,000 or less, from the standpoint of the handleability.

The number average molecular weight (Mn) of the liquid conjugated diene-based rubber is not particularly limited, is preferably more than 1,000, more preferably 2,000 or more, further preferably 3,000 or more, still further preferably 5,000 or more, and still more further preferably 20,000 or more, from the standpoint of the enhancement of the adhesiveness, and is preferably 120,000 or less, more preferably 75,000 or less, further preferably 50,000 or less, and still further preferably 47,000 or less, from the standpoint of the handleability.

The Mw and Mn of the liquid conjugated diene-based rubber are polystyrene conversion values of the weight average molecular weight and the number average molecular weight obtained from the measurement with gel permeation chromatography (GPC), and specifically may be measured by the method described in the examples.

The molecular weight distribution (Mw/Mn) of the liquid conjugated diene-based rubber is preferably 1.00 to 5.00, more preferably 1.00 to 3.00, further preferably 1.00 to 2.00, still further preferably 1.00 to 1.50, and particularly preferably 1.00 to 1.30. In the case where Mw/Mn is in the range, the fluctuation in viscosity of the liquid conjugated diene-based rubber is small, resulting in easy handleability. The molecular weight distribution (Mw/Mn) means the ratio of standard polystyrene conversion weight average molecular weight (Mw)/standard polystyrene conversion number average molecular weight (Mn) obtained from the measurement with GPC.

The glass transition temperature (Tg) of the liquid conjugated diene-based rubber may vary depending on the vinyl content of the conjugated diene unit, the kind of the conjugated diene, the content of the unit derived from the additional monomer other than the conjugated diene, and the like, and is preferably -100 to 10°C, more preferably -100 to 0°C, further preferably -100 to -10°C. In the case where the Tg is in the range, the viscosity thereof can be prevented from being increased, so as to provide easy handleability.

The glass transition temperature (Tg) of the liquid conjugated diene-based rubber means a value calculated from the value of the peak top of DDSC in measurement for a thermogram through differential scanning calorimetry (DSC). Specifically, the measurement can be carried out by the method described in the examples.

The vinyl content of the liquid conjugated diene-based rubber is preferably 80% by mole or less, more preferably 50% by mole or less, and further preferably 30% by mole or less. In the case where the vinyl content is in the range, the adhesiveness is enhanced.

In the description herein, the "vinyl content" means the total molar percentage of the conjugated diene units bonded via a 1,2-bond or a 3,4-bond (i.e., the conjugated diene units bonded via other bond than a 1,4-bond) in 100% by mole in total of the conjugated diene units contained in the liquid conjugated diene-based rubber. The vinyl content can be calculated by $^1$H-NMR from the integrated value ratio of the signal derived from the conjugated diene units bonded via a 1,2-bond or a 3,4-bond to the signal derived from the conjugated diene units bonded via a 1,4-bond.

From the standpoint of the enhancement of the stability of the emulsion, the content of the liquid conjugated diene-based rubber in the oil-in-water emulsion (A) is preferably 1% by mass or more, more preferably 5% by mass or more, and further preferably 8% by mass or more, and preferably 40% by mass or less, more preferably 30% by mass or less, and further preferably 20% by mass or less, based on the whole amount of the oil-in-water emulsion (A). In the case where the content of the liquid conjugated diene-based rubber in the oil-in-water emulsion (A) is in the range, the viscosity of the emulsion can be prevented from becoming extremely high while enhancing the stability of the emulsion in the production. Therefore, the production efficiency is enhanced.

From the standpoint of the enhancement of the adhesion force, the content of the liquid conjugated diene-based rubber in the aqueous adhesive of the present invention is preferably 0.01% by mass or more, more preferably 0.05% by mass or more, and further preferably 0.1% by mass or more, and preferably 10% by mass or less, more preferably 5% by mass or less, and further preferably 3% by mass or less, based on the whole amount of the aqueous adhesive. In the case where the content of the liquid conjugated diene-based rubber in the aqueous adhesive is in the range, the viscosity of the emulsion composition can be prevented from becoming extremely high while enhancing the stability of the emulsion in the production. Therefore, the production efficiency is enhanced.

<Surfactant>

The surfactant used for the oil-in-water emulsion (A) is not particularly limited, and examples thereof include a cationic surfactant, an anionic surfactant, a nonionic surfactant, and an amphoteric surfactant. Among these, a nonionic surfactant is preferred from the standpoint of the compatibility of the aqueous adhesive with rubber. One kind of the surfactant may be used alone, or two or more kinds thereof may be used in combination. By preparing the oil-in-water emulsion (A) containing the liquid conjugated diene-based rubber using the surfactant in the present invention, the aqueous adhesive can be stably stored for an extended period of time in the coexistence of the crosslinking agent.

Examples of the nonionic surfactant include a polyoxyalkylene-based nonionic surfactant, such as a higher alcohol alkylene oxide adduct, an alkyl phenol alkylene oxide adduct, a styrenated phenol alkylene oxide adduct, a fatty acid alkylene oxide adduct, a polyhydric alcohol aliphatic ester alkylene oxide adduct, a higher alkylamine alkylene oxide adduct, and a fatty acid amide alkylene oxide adduct, and a polyhydric alcohol-based nonionic surfactant, such as alkylglycoside and a sucrose fatty acid ester. The nonionic surfactants may be used alone, or depending on necessity, two or more kinds thereof may be used in combination.

Examples of a commercially available product of the nonionic surfactant include "ADEKA TOL TN100", "ADEKA TOL PC-6", "ADEKA TOL PC-8", "ADEKA TOL PC-10", and "ADEKA TOL SO-80" produced by ADEKA Corporation.

Examples of the cationic surfactant include an alkylammonium acetate salt, an alkyl dimethyl benzyl ammonium salt, an alkyl trimethyl ammonium salt, a dialkyl dimethyl ammonium salt, an alkyl pyridinium salt, an oxyalkylene alkylamine, and a polyoxyalkylene alkylamine. The cationic surfactants may be used alone, or depending on necessity, two or more kinds thereof may be used in combination.

Examples of the anionic surfactant include a carboxylate salt, such as a fatty acid soap, a sulfate salt, such as a higher alcohol sulfate salt, a higher alkyl polyalkylene glycol ether sulfate salt, a sulfate salt of a styrenated phenol alkylene oxide adduct, a sulfate salt of an alkyl phenol alkylene oxide adduct, a sulfated oil, a sulfated fatty acid ester, a sulfated fatty acid, and a sulfated olefin, a sulfonic acid salt, such as an alkylbenzene sulfonate, an alkyl naphthalene sulfonate, a naphthalene sulfonate, a formalin condensate of naphthalenesulfonic acid, an $\alpha$-olefin sulfonate, a paraffin sulfonate, and a sulfosuccinic acid diester salt, and a higher alcohol phosphoric acid ester salt. The anionic surfactants may be used alone, or depending on necessity, two or more kinds thereof may be used in combination.

Depending on necessity, the nonionic surfactant and the anionic surfactant may be combined.

Examples of the amphoteric surfactant include an alkyl carboxybetaine.

The hydrophilic-lipophilic balance (HLB) value of the nonionic surfactant is preferably 6 to 17. In the case where the HLB value is in the range, reinforcing fibers having favorable compatibility with the liquid conjugated diene-based rubber and oil described below and favorable adhesiveness to rubber can be obtained. From the standpoint of stability of use environment and operativity, an adhesive component is preferably applied as the oil-in-water emulsion to fibers. From the standpoint of the storage stability in water, the lower limit of the HLB value is preferably 8 or more, and further preferably 10 or more. From the standpoint of the compatibility with the adhesive component and the adhesiveness to rubber, the upper limit of the HLB value is preferably 16 or less, and further preferably 14 or less.

The HLB value is an index indicating the balance of hydrophilicity and lipophilicity, is represented by a value of 0 to 20, and can be calculated, for example, by the following expression (I) based on the Griffin method.

$$\text{HLB value} = 20 \times \text{sum of formula weight of hydrophilic moiety} / \text{molecular weight}$$

(I)

In the identification of the nonionic surfactant, a molecular weight and a constituent unit are detected and measured through mass spectrometry, a structure is detected and measured through $^1$H- and $^{13}$C-NMR, and a structure can be identified from the results. Therefore, the HLB value can be determined using the expression (I) from the identified information. Examples of a method for isolating the nonionic surfactant from the adhesive component include a method in which fractionation and separation are performed through reverse phase liquid chromatography.

From the standpoint of the enhancement of the stability of the emulsion, the content of the surfactant in the oil-in-water emulsion (A) is preferably 1 part by mass or more, more preferably 5 parts by mass or more, and further preferably 10 parts by mass or more, and preferably 30 parts by mass or less, more preferably 25 parts by mass or less, and further preferably 20 parts by mass or less, per 100 parts by mass of the conjugated diene-based rubber in the oil-in-water emulsion (A).

<Method for Producing Oil-In-Water Emulsion (A)>

A method for producing the oil-in-water emulsion (A) is not particularly limited, it is preferred that the emulsion be prepared by a mechanical method or a chemical method and then used at a prescribed concentration after dilution or the like.

Examples of the mechanical method include methods using a homogenizer, a homomixer, a disperser mixer, a colloid mill, a pipeline mixer, a high-pressure homogenizer, an ultrasonic emulsifier, and the like, which may be used alone or as a combination thereof.

Examples of the chemical method include various methods, such as an inverse emulsification method, a D-phase emulsification method, an HLB temperature emulsification method, a gel emulsification method, and a liquid crystal emulsification method, and an inverse emulsification method is preferred from the standpoint of the achievement of an emulsion having a fine particle diameter in a convenient manner. For providing an emulsion having a fine particle diameter, it may be preferred in some cases that the operation is performed while heating the system to an appropriate temperature (e.g., 30 to 80°C) for the purpose of lowering the viscosity of the liquid conjugated diene-based rubber.

In the present invention, the pH may be regulated by adding an alkaline substance, such as sodium hydroxide, potassium hydroxide, and an amine compound, for the purpose of enhancing the stability of the emulsion, depending on necessity.

In the case of using the alkaline substance, the amount of the alkaline substance is preferably 0.01 parts by mass or more, more preferably 0.1 parts by mass or more, and further preferably 0.5 parts by mass or more, and preferably 10 parts by mass or less, more preferably 5 parts by mass or less, and further preferably 3 parts by mass or less, per 100 parts by mass of the conjugated diene-based rubber in the oil-in-water emulsion (A) from the standpoint of the enhancement of the stability of the emulsion.

<Aqueous Solution or Aqueous Dispersion (B) of Crosslinking Agent>

[Crosslinking Agent]

For the aqueous adhesive of the present invention, the aqueous solution or aqueous dispersion (B) of the crosslinking agent is used. Even in the case where the temperature becomes high in vulcanization by using the crosslinking agent, the liquid conjugated diene-based rubber is less likely to be absorbed into the elastomer that is an adhesion object, and therefore a sufficient adhesion force can be obtained.

The crosslinking agent used in the present invention is not particularly limited as far as it is a compound capable of forming covalent bonding with both the liquid conjugated diene-based rubber and the fibers. Examples thereof include an epoxy resin, an isocyanate resin, an oxazoline group-containing resin, a carbodiimide group-containing resin, an amino resin, a carboxy group-containing resin, a carboxylic anhydride-containing resin, a polyester resin, a urethane resin, a phenol resin, and an aldehyde resin. Among these, in the case of using polyvinyl alcohol-based fibers as the fibers, at least one kind selected from an epoxy resin and an isocyanate resin is preferred. In the case of using polyester-based fibers, at least one kind selected from an oxazoline group-containing resin and an carbodiimide group-containing resin is preferred.

From the standpoint of the prevention of absorption of the liquid conjugated diene-based rubber into the elastomer under a reaction with the liquid conjugated diene-based rubber and the enhancement of the adhesion force, the content of the crosslinking agent in the aqueous solution or aqueous dispersion (B) of the crosslinking agent is preferably 0.6% by mass or more, more preferably 0.8% by mass or more, and further preferably 1.0% by mass or more, based on the whole amount of the aqueous solution or aqueous dispersion (B) of the crosslinking agent. From the standpoint of the prevention of reduction in fiber physical properties by deteriorating the flexibility of the reinforcing fibers, the content is preferably 30% by mass or less, more preferably 20% by mass or less, and further preferably 10% by mass or less.

From the standpoint of the prevention of absorption of the liquid conjugated diene-based rubber into the elastomer under a reaction with the liquid conjugated diene-based rubber and the enhancement of the adhesion force, the content of the crosslinking agent in the aqueous adhesive is preferably 10 to 1,000 parts by mass, and more preferably 30 to 800 parts by mass, per 100 parts by mass of the liquid conjugated diene-based rubber.

More specifically, it is preferably 0.5% by mass or more, more preferably 0.7% by mass or more, and further preferably 0.9% by mass or more, and preferably 40% by mass or less, more preferably 30% by mass or less, and further preferably 20% by mass or less, based on the whole amount of the aqueous adhesive. In the case where the content of the crosslinking agent in the aqueous adhesive is equal to or more than the lower limit value, the crosslinking agent can be allowed to react with the liquid conjugated diene-based rubber, to prevent absorption of the liquid conjugated diene-based rubber into the elastomer. In contrast, in the case where the content of the crosslinking agent in the aqueous adhesive is equal to or less than the upper limit value, the adhesion force of an adhesive layer can be prevented from being excessively increased.

[Method for Producing Aqueous Solution or Aqueous Dispersion (B) of Crosslinking Agent]

A method for producing the aqueous solution or aqueous dispersion (B) of the crosslinking agent is not particularly limited, and the aqueous solution or aqueous dispersion (B) of the crosslinking agent can be produced by mixing the crosslinking agent with water.

<Additional Component>

[Oil]

In the present invention, as the component constituting the adhesive layer, an oil may be used. The use of an oil can prevent uneven coating of the adhesive component from being generated, and therefore the adhesiveness is enhanced. The improvement in passing property through a manufacturing facility in production can prevent contamination of the manufacturing facility, and therefore the production efficiency is enhanced.

In the case of using an oil in the present invention, from the standpoint of the stabilization of the emulsion, the oil is preferably contained in the oil-in-water emulsion (A). The oil contained in the oil-in-water emulsion (A) reduces the viscosity, and therefore the handleability is enhanced. Attaching the oil onto the fibers increases the smoothness of a layer of the aqueous adhesive (adhesive layer), to enhance the process passing property.

The oil used in the present invention is preferably an oil having a vapor pressure at 20°C of 10 Pa or less, or so-called a non-volatile oil. In the case where the vapor pressure at 20°C of the oil is more than 10 Pa, the oil is volatilized after applying the adhesive component to the fiber surface, and the reinforcing fibers may be worn. Further, the uneven coating of the adhesive component is likely to be generated, and the adhesiveness of the adhesive component is deteriorated. Furthermore, the manufacturing facility may be contaminated in the production. From this standpoint, the vapor pressure at 20°C of the oil is preferably 5 Pa or less, more preferably 1 Pa or less, further preferably $1.0 \times 10^{-1}$ Pa or less, still further preferably $1.0 \times 10^{-2}$ Pa or less, and still more further preferably $1.0 \times 10^{-5}$ Pa or less.

In the present invention, the vapor pressure at 20°C of the oil refers to a value calculated from an optimum curve obtained by applying an Antoine equation to a measured value obtained by measurement by the gas saturation method.

The oil having a vapor pressure at 20°C of 10 Pa or less is not particularly limited as far as it is compatible with the liquid conjugated diene-based rubber. Examples of the oil include a natural oil and a synthetic oil. Examples of the natural oil include a mineral oil and a vegetable oil.

Examples of the mineral oil include a paraffinic mineral oil, an aromatic mineral oil, and a naphthene-based mineral oil that are obtained by a general purification method, such as solvent purification or hydrogenation purification, a wax produced by the Fischer-Tropsch process (gas-to-liquid wax), and a mineral oil produced by isomerization of the wax.

Examples of a commercially available product of the paraffinic mineral oil include "Diana Process Oil" series produced by Idemitsu Kosan Co., Ltd., and "Super Oil" series produced by JX Energy Corporation.

Examples of the vegetable oil include a linseed oil, a camellia oil, a macadamia seed oil, a corn oil, a mink oil, an olive oil, an avocado oil, a sasanqua oil, a castor oil, a safflower oil, a jojoba oil, a sunflower oil, an almond oil, a rapeseed oil, a sesame oil, a soybean oil, a peanut oil, a cottonseed oil, a coconut oil, a palm kernel oil, and a rice bran oil.

Examples of the synthetic oil include a hydrocarbon-based synthetic oil, an ester-based synthetic oil, and an ether-based synthetic oil. Examples of the hydrocarbon-based synthetic oil include an α-olefin oligomer, such as a polybutene, a polyisobutylene, a 1-octene oligomer, a 1-decene oligomer, and an ethylene-propylene copolymer, or a hydrogenated product thereof, an alkylbenzene, and an alkylnaphthalene. Examples of the ester-based synthetic oil include a triglycerol fatty acid ester, a diglycerol fatty acid ester, a monoglycerol fatty acid ester, a monoalcohol fatty acid ester, a polyhydric alcohol fatty acid ester, a phthalic acid ester, an adipic acid ester, and an epoxy-based polymer. Examples of the ether-based synthetic oil include a polyoxyalkylene glycol and a polyphenyl ether.

In the case of the natural oil, a fatty acid ester-based oil containing at least one kind selected from a triglycerol fatty acid ester, a diglycerol fatty acid ester, a monoglycerol fatty acid ester, a monoalcohol fatty acid ester, a polyhydric alcohol fatty acid ester, a phthalic acid ester, an adipic acid ester, and an epoxy-based polymer.

Examples of a commercially available product of the synthetic oil include "LINEALENE" series produced by Idemitsu Kosan Co., Ltd., "FGC32", "FGC46", and "FGC68" produced by ANDEROL, "EXCEPARL TGO" produced by Kao Corporation, and "ADK-CIZER PN-7160" produced by ADEKA Corporation.

Among these, from the standpoint of reduction of the generation of uneven coating of the adhesive component and the enhancement of the adhesiveness, a triglycerol fatty acid ester, a phthalic acid ester, and an adipic acid ester are preferred, and triglyceride 2-ethylhexanoate, and an adipic acid ester are more preferred.

In the case of using the oil for the aqueous adhesive, from the standpoint of the stabilization of the emulsion, the oil is preferably used as the component constituting the oil-in-water emulsion (A), that is, the oil is preferably contained in the oil-in-water emulsion (A).

The content of the oil in the oil-in-water emulsion (A) is preferably 50 parts by mass or more, more preferably 70 parts by mass or more, and further preferably 100 parts by mass or more, and from the standpoint of adhesiveness, preferably 900 parts by mass or less, more preferably 500 parts by mass or less, further preferably 300 parts by mass or less, and still further preferably 200 parts by mass or less, per 100 parts by mass of the conjugated diene-based rubber.

[Additional Component other than Oil]

Examples of the additional component other than the oil include another polymer (such as unmodified liquid conjugated diene-based rubber), an acid, an alkali, an antioxidant, a curing agent, a dispersant, a pigment, a dye, an adhesion aid, and carbon black.

In the case where the aqueous adhesive contains the additional component other than the oil, the content thereof is preferably 10,000 parts by mass or less, more preferably 1,000 parts by mass or less, further preferably 100 parts by mass or less, and still further preferably 50 parts by mass or less, per 100 parts by mass of the liquid conjugated diene-based rubber.

The aqueous adhesive of the present invention preferably contains no organic solvent. Specifically, the content of the organic solvent in the aqueous adhesive is preferably less than 1.0% by mass, more preferably less than 0.9% by mass, further preferably less than 0.7% by mass, and still further preferably less than 0.5% by mass. In the case where the content of the organic solvent in the aqueous adhesive is less than the upper limit value, a burden on the work environment can be reduced, and the operation for forming the adhesive layer can be simplified, to enhance productivity.

The content of the organic solvent in the aqueous adhesive means a value measured by gas chromatography. Specifically, the measurement can be carried out by the method described in the examples.

<Method for Producing Aqueous Adhesive>

A method for producing the aqueous adhesive of the present invention is not particularly limited, and the aqueous adhesive can be obtained by mixing the oil-in-water emulsion (A) and the aqueous solution or aqueous dispersion (B) of the crosslinking agent.

<Viscosity of Aqueous Adhesive>

The viscosity at 25°C of the aqueous adhesive of the present invention is preferably 0.1 to 30.0 mPa s, more preferably 1.0 to 15.0 mPa s, and further preferably 3.0 to 12.0 mPa s. In the case where the viscosity at 25°C of the aqueous adhesive of the present invention is in the range, the aqueous adhesive has a proper viscosity, and therefore the adhesive can be more uniformly and efficiently attached to the fibers. Further, the adhesive is less likely to be attached to the manufacturing facility, and therefore the manufacturing facility can be prevented from being contaminated.

The viscosity of the aqueous adhesive means a viscosity that is measured at 25°C with a Brookfield viscometer (B type viscometer). A rotor and rotational speed in the measurement are appropriately determined so as to be closer to the full scale thereof.

[Reinforcement Fibers]

The reinforcing fibers of the present invention are reinforcing fibers to which the aqueous adhesive of the present invention is attached, specifically reinforcing fibers having an adhesive layer formed from the aqueous adhesive on at least a part of a fiber surface.

The adhesive layer formed from the aqueous adhesive is provided on at least a part of the fiber surface, and therefore the reinforcing fibers of the present invention can firmly adhere the fibers to the elastomer without absorbing the liquid rubber into the elastomer that is an adhesion object by heating in vulcanization.

In the present invention, "including an adhesive layer on at least a part of a fiber surface" may mean that the entirety of the fibers is covered with the adhesive layer, but it suffices that at least a part thereof is covered with the adhesive layer, and for example, may be an embodiment in which the adhesive component exists as a film or a layer.

In the present invention, the reinforcing fibers excellent in adhesiveness to rubber are obtained even though formaldehyde and a resin obtained from formaldehyde harmful to human bodies as a raw material are not contained. In the present invention, in the case where the adhesive layer contains a resin obtained from formaldehyde as a raw material, examples of the resin include a resorcinol-formaldehyde resin, a phenol-formaldehyde resin, a melamine-formaldehyde resin, and derivatives thereof. In the case where the adhesive layer contains the formaldehyde component, the content thereof is preferably 10 parts by mass or less, more preferably 5 parts by mass or less, further preferably 3 parts by mass or less, and still further preferably 1 part by mass or less, per 100 parts by mass of the liquid conjugated diene-based rubber, and it is particularly preferred that substantially no formaldehyde component is contained. The content of formaldehyde can be measured by HPLC or the like after extracting the adhesive layer from the reinforcing fibers with a solvent, such as toluene.

<Fibers>

The fibers used in the reinforcing fibers of the present invention are not particularly limited, and hydrophilic fibers and hydrophobic fibers may be used. In the present invention, the "fibers" encompasses not only short fibers and long fibers, but also such forms as nonwoven fabric, woven fabric, knitted fabric, felt, and sponge.

Examples of the hydrophilic synthetic fibers include synthetic fibers constituted by a thermoplastic resin having a hydrophilic functional group, such as a hydroxy group, a carboxy group, a sulfonic acid group, and an amino group, and/or a hydrophilic bond, such as an amide bond.

Specific examples of the thermoplastic resin include a polyvinyl alcohol-based resin, a polyamide-based resin (for example, an aliphatic polyamide, such as polyamide 6, polyamide 66, polyamide 11, polyamide 12, polyamide 610, polyamide 612, and polyamide 9C (i.e., a polyamide formed of nonanediamine and cyclohexanedicarboxylic acid); a semi-aromatic polyamide synthesized from an aromatic dicarboxylic acid, such as polyamide 9T (i.e., a polyamide formed of nonanediamine and terephthalic acid), and an aliphatic diamine; and a wholly aromatic polyamide synthesized from an aromatic dicarboxylic acid, such as poly-p-phenylene terephthalamide, and an aromatic diamine), and a polyacrylamide-based resin.

Among these, a polyvinyl alcohol-based resin and a polyamide-based resin are preferred. One kind of the hydrophilic synthetic fibers may be used alone, or two or more kinds thereof may be used in combination. The hydrophilic synthetic fibers may also be subjected to a hydrophilic treatment described later for further enhancing the hydrophilicity thereof.

Examples of the hydrophilic natural fibers include natural cellulose fibers, for example, wood pulp, such as kraft pulp, and non-wood pulp, such as cotton pulp and straw pulp.

Examples of the hydrophilic regenerated fibers include regenerated cellulose fibers, such as rayon, lyocell, cupra, and polynosic.

One kind of these natural fibers and regenerated fibers may be used alone, or two or more kinds thereof may be used in combination. These hydrophilic natural fibers and regenerated fibers may also be subjected to a hydrophilic treatment described later for further enhancing the hydrophilicity thereof.

It suffices that the hydrophilic fibers have hydrophilicity at least on the surface thereof, and for example, the hydrophilic fibers may be fibers obtained by subjecting the surface of hydrophobic fibers to a hydrophilic treatment, a core-shell type composite fibers including a hydrophobic resin as the core and a hydrophilic resin as the shell, or the like. For the example of hydrophilic resin constituting the shell, reference is made to the description relating to the hydrophilic synthetic fibers. Examples of the hydrophobic fibers formed of the hydrophobic resin include the hydrophobic fibers described later.

The hydrophilic treatment is not particularly limited as far as the treatment chemically or physically imparts a hydrophilic functional group to the fiber surface, and may be performed, for example, by a method for modifying the hydrophobic fibers formed of the hydrophobic resin described later with a compound containing a hydrophilic functional group, such as an isocyanate group, an epoxy group, a hydroxy group, an amino group, an ether group, an aldehyde group, a carbonyl group, a carboxy group, and a urethane group, or a derivative thereof, a method of modifying the surface through electron beam irradiation, or the like.

In the present invention, the hydrophobic fibers can also be used. The hydrophobic fibers are difficult to firmly adhere to rubber since the hydrophobic fibers do not generally have a polar functional group on the fiber surface. However, with the adhesive layer provided on the fiber surface in the present invention, even hydrophobic fibers can be firmly adhered to rubber.

Examples of the hydrophobic fibers that can be used in the present invention include polyolefin-based fibers, such as polyethylene and polypropylene, polyester-based fibers, such as polyethylene terephthalate, and wholly aromatic polyester-based fibers, and among these, polyester-based fibers are preferred due to the excellence thereof in production cost, strength, heat resistance, durability, and the like.

In the present invention, synthetic fibers and regenerated fibers are preferred among the fibers described above, and one or more kind of fibers selected from polyamide-based fibers, polyvinyl alcohol-based fibers, polyester-based fibers, and regenerated cellulose-based fibers are preferred among these.

In the present invention, one kind of fibers may be used alone, or two or more kinds thereof may be used in combination.

<Physical Properties of reinforcing fibers>

The single fiber fineness of the reinforcing fibers is preferably 0.1 dtex or more and 30 dtex or less. A single fiber fineness of less than 0.1 dtex may be allowed but is difficult to produce industrially, and therefore the single fiber fineness is preferably 0.1 dtex or more. In the case where the single fiber fineness is 30 dtex or less, the surface area of the fibers formed to be reinforcing fibers is large to enhance the adhesiveness to rubber. From these standpoints, the single fiber fineness of the reinforcing fibers of the present invention is more preferably 0.3 dtex or more, further preferably 0.5 dtex or more, and still further preferably 1 dtex or more, and more preferably 20 dtex or less, further preferably 15 dtex or less, and still further preferably 10 dtex or less. In the present invention, the reinforcing fibers are preferably multifilaments, and particularly preferably multifilaments that satisfy the single fiber fineness range.

The rubber adhesion force of the reinforcing fibers of the present invention is preferably 20 N/25.4 mm or more, more preferably 30 N/25.4 mm or more, further preferably 35 N/25.4 mm or more, and still further preferably 40 N/25.4 mm or more, and is generally 200 N/25.4 mm or less. In the case where the rubber adhesion force of the reinforcing fibers is the lower limit value or more, a woven fabric, a knitted fabric, and an elastomer product excellent in reinforcement strength can be obtained.

The rubber adhesion force of the reinforcing fibers can be measured by the method described in the examples.

The reinforcing fibers of the present invention can be used in any arbitrary form, and are preferably used in any form of a fiber cord, a woven fabric, a knitted fabric, and the like that each contain the reinforcing fibers at least partly therein, and more preferably as a woven fabric or a knitted fabric that contains the reinforcing fibers at least partly therein. For example, the reinforcing fibers can be used as a knitted fabric to be adhered to rubber as described hereinunder. The reinforcing fibers can also be used by being buried in a resin, cement, or the like.

[Method for Producing reinforcing fibers]

A method for producing the reinforcing fibers of the present invention is not particularly limited, and for example, the reinforcing fibers are preferably produced by a method including the following steps I-1 and I-2 in turn.

<Step I-1: Step of attaching aqueous adhesive to surface of fibers>

In the step I-1, a method of attaching the aqueous adhesive of the present invention to the fibers is not particularly limited, and is preferably performed by one or more kind selected from immersion, a roll coater, an oiling roller, an oiling guide, nozzle (spray) coating, brush coating, and the like.

The amount of the aqueous adhesive attached is preferably 0.01 parts by mass or more, more preferably 0.1 parts by mass or more, and further preferably 1 part by mass or more, from the standpoint of the enhancement of the adhesiveness to the reinforcing fibers and rubber, and is preferably 10 parts by mass or less, more preferably 8 parts by mass or less, and further preferably 7 parts by mass or less, from the standpoint of the balance between the production cost and the effects, all per 100 parts by mass of the fiber used as the raw material.

The amount of the aqueous adhesive attached can be measured by the method described in the examples.

<Step I-2: Step of subjecting fibers having aqueous adhesive attached thereto obtained in step I-1 to heat treatment>

The heat treatment in the step I-2 is preferably performed at a treatment temperature of 100 to 200°C for a treatment time of 0.1 seconds to 2 minutes. The liquid conjugated diene-based rubber contained in the aqueous adhesive has a reactive multiple bond, and therefore the heat treatment in the presence of oxygen is preferably at 240°C or less, and more preferably 200°C or less. In the case where the temperature of the heat treatment is in the range, the adhesion force can be increased without reducing the amount of the reactive multiple bond in the liquid conjugated diene-based rubber, and furthermore the fibers are prevented from being deteriorated, so as to improve the quality, such as the coloration.

[Elastomer Product]

An elastomer product of the present invention is not particularly limited as far as the elastomer product uses the reinforcing fibers. In particular, an elastomer product having the reinforcing fibers and a rubber layer is preferred since the reinforcing fibers have excellent adhesiveness to rubber. The reinforcing fibers used in the elastomer product are preferably used as a woven fabric or a knitted fabric containing the reinforcing fibers at least partly therein, and more preferably as a laminate formed by laminating a reinforcing layer formed of a woven fabric or a knitted fabric containing the reinforcing fibers at least partly therein, and a rubber layer, from the standpoint of the retention of the form of rubber.

The elastomer product can be used, for example, as a tire, such as an automobile tire, a belt, such as a conveyor belt and a timing belt, a hose, and a rubber product member, such as vibration absorbing rubber, and is more preferably used as a tire, a belt, or a hose among the above.

In the automobile tire, for example, the elastomer product can be used for various members of a composite material formed of the reinforcing fibers and a rubber component, such as a belt, a carcass ply, a breaker, and a bead tape.

The hose can be used for the purpose of transporting various fluids in various applications, and is suitable, for example, for a fluid transport hose for automobiles, and is particularly used favorably for a liquid fuel hose for automobiles, a brake oil hose for automobiles, a hydraulic hose for construction machinery and agricultural machinery, an oil transfer hose, and a refrigerant hose. The hose is more preferably used for a brake oil hose for automobiles.

The elastomer product is preferably molded by using the reinforcing fibers and a rubber composition prepared by blending a compounding ingredient generally used in the rubber industry into a rubber component.

The rubber component is not particularly limited, and examples thereof include NR (natural rubber), IR (polyisoprene rubber), BR (polybutadiene rubber), SBR (styrene-butadiene rubber), NBR (nitrile rubber), EPM (ethylene-propylene copolymer rubber), EPDM rubber (ethylene-propylene-non-conjugated diene copolymer rubber), IIR (butyl rubber), halogenobutyl rubber, CR (chloroprene rubber), CSM (chlorosulfonated polyethylene), and CPE (chlorinated polyethylene rubber). Among these, EPDM rubber, NR, SBR, and NBR are more preferably used. One kind of the rubber component may be used alone, or two or more kinds thereof may be used in combination. In hose applications, EPDM rubber and NBR are preferably used.

The rubber composition may further contain a filler in addition to the rubber component. Examples of the filler include an inorganic filler, such as carbon black, silica, clay, mica, calcium carbonate, magnesium hydroxide, aluminum hydroxide, barium sulfate, titanium oxide, glass fibers, fibrous fillers, and glass balloons; and an organic filler, such as resin particles, wood powder, and cork powder. The filler contained in the rubber composition can improve the physical properties of the composition, such as the mechanical strength, the heat resistance, or the weather resistance, can control the hardness thereof, and can increase the amount of rubber.

Among the fillers, carbon black and silica are preferred from the standpoint of the improvement of the physical properties such as the enhancement of the mechanical strength, and the likes.

Examples of the carbon black include furnace black, channel black, thermal black, acetylene black, and Ketjen black. Among these kinds of carbon black, furnace black is preferred from the standpoint of the enhancement of the crosslinking rate and the mechanical strength.

The average particle diameter of the carbon black is preferably 5 to 100 nm, more preferably 5 to 80 nm, and further preferably 5 to 70 nm. The average particle diameter of the carbon black can be determined by measuring the diameter of each particle with a transmission electron microscope and calculating the average value thereof.

Examples of the silica include wet process silica (hydrous silicic acid), dry process silica (silicic anhydride), calcium silicate, and aluminum silicate. Among these kinds of silica, wet process silica is preferred.

The average particle diameter of the silica is preferably 0.5 to 200 nm, more preferably 5 to 150 nm, and further preferably 10 to 100 nm.

The average particle diameter of the silica can be determined by measuring the diameter of each particle with a transmission electron microscope and calculating the average value thereof.

In the rubber composition, the filler content is preferably 20 to 150 parts by mass, more preferably 25 to 130 parts by mass, and further preferably 25 to 110 parts by mass, per 100 parts by mass of the rubber component.

In the case where a filler other than silica and carbon black is used as the filler, the content thereof is preferably 20 to 120 parts by mass, more preferably 20 to 90 parts by mass, and further preferably 20 to 80 parts by mass, per 100 parts by mass of the rubber component.

One kind of the filler may be used alone, or two or more kinds thereof may be used in combination.

The rubber composition may further contain a crosslinking agent for crosslinking the rubber component. Examples of the crosslinking agent include sulfur, a sulfur compound, oxygen, an organic peroxide, a phenol resin, an amino resin, a quinone and a quinone dioxime derivative, a halogen compound, an aldehyde compound, an alcohol compound, an epoxy compound, a metal halide and an organic metal halide compound, and a silane compound. One kind of the crosslinking agent may be used alone, or two or more kinds thereof may be used in combination. The crosslinking agent is generally contained in an amount of 0.1 to 10 parts by mass, preferably 0.5 to 10 parts by mass, and more preferably 0.8 to 5 parts by mass, per 100 parts by mass of the rubber component, from the standpoint of the mechanical properties of the crosslinked product.

For example, in the case where the rubber composition contains sulfur, a sulfur compound, or the like as the crosslinking agent for crosslinking (vulcanizing) the rubber component, the rubber composition may further contain a vulcanization accelerator. Examples of the vulcanization accelerator include a guanidine-based compound, a sulfenamide-based compound, a thiazole-based compound, a thiuram-based compound, a thiourea-based compound, a dithiocarbamic acid-based compound, an aldehyde-amine-based compound, an aldehyde-ammonia-based compound, an imidazoline-based compound, and a xanthate-based compound. One kind of the vulcanization accelerator may be used alone, or two or more kinds thereof may be used in combination. The vulcanization accelerator is generally contained in an amount of 0.1 to 15 parts by mass, and preferably 0.1 to 10 parts by mass, per 100 parts by mass of the rubber component.

For example, in the case where the rubber composition contains sulfur, a sulfur compound, or the like as the crosslinking agent for crosslinking (vulcanizing) the rubber component, the composition may further contain a vulcanization aid. Examples of the vulcanization aid include a fatty acid, such as stearic acid, a metal oxide, such as zinc oxide, and a fatty acid metal salt, such as zinc stearate. One kind of the vulcanization aid may be used alone, or two or more kinds thereof may be used in combination. The vulcanization aid is generally contained in an amount of 0.1 to 15 parts by mass, and preferably 1 to 10 parts by mass, per 100 parts by mass of the rubber component.

In the case where the rubber composition contains silica as a filler, the rubber composition preferably further contains a silane coupling agent. Examples of the silane coupling agent include a sulfide-based compound, a mercapto-based compound, a vinyl-based compound, an amino-based compound, a glycidoxy-based compound, a nitro-based compound, and a chlorine-based compound.

One kind of the silane coupling agent may be used alone, or two or more kinds thereof may be used in combination. The silane coupling agent is preferably contained in an amount of 0.1 to 30 parts by mass, more preferably 0.5 to 20 parts by mass, and further preferably 1 to 15 parts by mass, per 100 parts by mass of silica. In the case where the content of the silane coupling agent is in the range, the dispersibility, the coupling effect, and the reinforcing performance is improved.

The rubber composition may contain, depending on necessity, a process oil, such as a silicone oil, an aroma oil, TDAE (treated distilled aromatic extracts), MES (mild extracted solvates), RAE (residual aromatic extracts), a paraffin oil, and a naphthene oil, and a resin component, such as an aliphatic hydrocarbon resin, an alicyclic hydrocarbon resin, a C9-based resin, a rosin-based resin, a coumarone-indene-based resin, and a phenol-based resin, as a softening agent for the purpose of improving the workability, the fluidity, and the like, in such a range that does not impair the effects of the present invention. In the case where the rubber composition contains the process oil as the softening agent, the content thereof is preferably less than 50 parts by mass per 100 parts by mass of the rubber component.

The rubber composition may contain, depending on necessity, an additive, such as an antiaging agent, wax, an antioxidant, a lubricant, a light stabilizer, a scorching inhibitor, a working aid, a colorant, such as a pigment and a dye, a flame retardant, an antistatic agent, a delustering agent, an antiblocking agent, a UV absorbent, a mold release agent, a foaming agent, an antimicrobial agent, an antifungal agent, and a fragrance, in such a range that does not impair the effects of the present invention, for the purpose of improving the weather resistance, the heat resistance, the oxidation resistance, and the like. Examples of the antioxidant include a hindered phenol-based compound, a phosphorus-based compound, a lactone-based compound, and a hydroxy-based compound. Examples of the antiaging agent include an amine-ketone-based compound, an imidazole-based compound, an amine-based compound, a phenol-based compound, a sulfur-based compound, and a phosphorus-based compound. One kind of the additives may be used alone, or two or more kinds thereof may be used in combination.

As for the method for producing the elastomer product, for example, the reinforcing fibers are buried in the rubber composition before vulcanization, and then the rubber composition is vulcanized to provide an elastomer product including the fibers and the rubber component bonded via the adhesive component.

Examples of the brake oil hose for automobiles include one having an inner rubber layer and an outer rubber layer with one or two reinforcing layers containing the reinforcing fibers intervening between the inner rubber layer and the outer rubber layer.

Examples of the rubber component constituting the inner rubber layer and the outer rubber layer include those described above. Among the above, examples of the rubber component constituting the inner rubber layer include EPDM and SBR, and examples of the rubber component constituting the outer rubber layer include EPDM and CR. The reinforcing layer may be formed by knitting and braiding the reinforcing fibers.

As for the production method for the brake oil hose, a reinforcing layer (first reinforcing layer) formed by knitting and braiding the reinforcing fibers is formed on the outer surface of the inner rubber layer. In the case where two reinforcing layers are formed, an intermediate rubber layer is further formed on the outer surface of the first reinforcing layer, and another reinforcing layer (second reinforcing layer) formed by knitting and braiding the reinforcing fibers may be formed on the outer surface of the intermediate rubber layer. An outer rubber layer is then formed on the outer surface of the reinforcing layer (first reinforcing layer or second reinforcing layer), and vulcanized to provide the intended brake oil hose.

The vulcanization temperature can be appropriately selected depending on the kind of the constituent materials for each layer of the brake oil hose and the like, and is preferably 200°C or less from the standpoint of the suppression of the deterioration of the rubber and the reinforcing fibers and the enhancement of the adhesion force to the rubber and the reinforcing fibers.

Examples

The present invention will be described more specifically with reference to examples and the like, but the present invention is not restricted by the examples and the like.

For a liquid acrylonitrile-butadiene rubber (1) (hereinafter also referred to as "liquid NBR (1)", product name "Hypro 1300X18 CTBNX", the content of monomer unit derived from acrylonitrile: about 21% by mole, produced by HUNTSMAN), a liquid acrylonitrile-butadiene rubber (2) (hereinafter also referred to as "liquid NBR (2)", product name "Hypro 1300X16 ATBN", the content of monomer unit derived from acrylonitrile: about 18% by mole, produced by HUNTSMAN), and a liquid polyisoprene rubber (hereinafter also referred to as "liquid IR", product name "LIR-410", produced by KURARAY CO., LTD.) used as a liquid conjugated diene-based rubber, the following physical properties were measured. Results are shown in Table 1.

<Methods for Measuring Weight Average Molecular Weight, Number Average Molecular Weight, and Molecular Weight Distribution>

The Mw, Mn, and Mw/Mn of the liquid conjugated diene-based rubber were determined as standard polystyrene conversion values by GPC (gel permeation chromatography). The apparatus and the condition for the measurement are as follows.

Apparatus: GPC apparatus "GPC8020", produced by TOSOH CORPORATION
Separation column: "TSKgel G4000HXL" produced by TOSOH CORPORATION
Detector: "RI-8020" produced by TOSOH CORPORATION
Eluent: tetrahydrofuran
Eluent flow rate: 1.0 mL/min
Sample concentration: 5 mg/10 mL
Column temperature: 40°C

<Method for Measuring Melt Viscosity>

The melt viscosity at 38°C of the liquid conjugated diene-based rubber was measured with a Brookfield viscometer (produced by Brookfield Engineering Labs. Inc.).

<Method for Measuring Glass Transition Temperature>

10 mg of the liquid conjugated diene-based rubber was collected on an aluminum pan, the thermogram of the liquid conjugated diene-based rubber was measured under a heating rate condition of 10°C/min with a differential scanning calorimeter (DSC), and the value of the peak top of DDSC was designated as the glass transition temperature.

<Average Number of Hydrogen Bonding Functional Group per One Molecule>

The average number of the hydrogen bonding functional group per one molecule of the liquid conjugated diene-based rubber was calculated from the equivalent (g/eq) of the hydrogen bonding functional group of the modified liquid conjugated diene-based rubber and the styrene conversion number average molecular weight Mn thereof, according to the following expression.

Average number if hydrogen bonding functional group per one molecule = [(number average molecular weight (Mn))/(molecular weight of styrene unit) × (average molecular weight of conjugated diene and additiona monomer unit contained depending on necessity other than conjugated diene)]/(equivalent of hydrogen bonding functional group)

A method for calculating the equivalent of the hydrogen bonding functional group may be appropriately selected depending on the kind of the hydrogen bonding functional group.

The average number of the hydrogen bonding functional group per one molecule of the monomethyl maleate-modified liquid conjugated diene-based rubber was calculated by determining the acid value of the monomethyl maleate-modified liquid conjugated diene-based rubber, and calculating the equivalent (g/eq) of the hydrogen bonding functional group from the acid value.

A sample after the modification reaction was washed four times with methanol (5 mL per 1 g of the sample) to remove impurities, such as an antioxidant, and then the sample was dried under reduced pressure at 80°C for 12 hours. 180 mL of toluene and 20 mL of ethanol were added to 3 g of the sample after subjecting to the modification reaction for dissolving the sample, and then the solution was subjected to neutralization titration with a 0.1 N ethanol solution of potassium hydroxide to determine the acid value thereof according to the following expression.

$$\text{Acid Value (mgKOH/g)} = (A-B) \times F \times 5.611/S$$

A: Dropwise addition amount (mL) of 0.1 N ethanol solution of potassium hydroxide needed for neutralization
B: Dropwise addition amount (mL) of 0.1 N ethanol solution of potassium hydroxide for blank test without sample
F: Titer of 0.1 N ethanol solution of potassium hydroxide
S: Mass (g) of weighed sample

The mass of the hydrogen bonding functional group contained in 1 g of the monomethyl maleate-modified liquid conjugated diene-based rubber was calculated, and the mass except for the functional group (the mass of the polymer main chain) contained in 1 g of the monomethyl maleate-modified liquid conjugated diene-based rubber was calculated, from the acid value according to the following expression. The equivalent (g/eq) of the hydrogen bonding functional group was then calculated according to the following expression.

[Mass of hydrogen bonding functional group per 1 g] = [acid value]/[56.11] × [molecular weight of hydrogen bonding functional group]/1000 [Mass of polymer main chain per 1 g] = 1 - [mass of hydrogen bonding functional group per 1 g] [Equivalent of hydrogen bonding functional group] = [mass of polymer main chain per 1 g]/([mass of hydrogen bonding functional group per 1 g]/[molecular weight of hydrogen bonding functional group])

For the average numbers of the hydrogen bonding functional group per one molecule of the liquid NBR (1) and the liquid NBR (2), the measurement was not performed, and reference was made to catalog values.

Table 1

| Liquid conjugated diene-based rubber | Mw (×10³) | Mn (×10³) | Molecular weight distribution Mw/Mn | Melt viscosity (Pa·s) at 38°C | Glass transition temperature (°C) | Hydrogen bonding functional group | Average number of hydrogen bonding functional group per one molecule |
|---|---|---|---|---|---|---|---|
| Liquid NBR (1) | 4.6 | 3.4 | 1.4 | 250 | -46 | Carboxy group | 2.4 |

(continued)

| Liquid conjugated diene-based rubber | Mw ($\times 10^3$) | Mn ($\times 10^3$) | Molecular weight distribution Mw/Mn | Melt viscosity (Pa·s) at 38°C | Glass transition temperature (°C) | Hydrogen bonding functional group | Average number of hydrogen bonding functional group per one molecule |
|---|---|---|---|---|---|---|---|
| Liquid NBR (2) | 4.9 | 3.8 | 1.3 | 145 | -51 | Amino group | 1.8 |
| Liquid IR | 32.4 | 28.0 | 1.2 | 430 | -59 | Maleic acid Monomethyl group | 10.0 |
| NBR means "acrylonitrile-butadiene rubber", and IR means "isoprene rubber". | | | | | | | |

<Preparation of Emulsion>

Preparative Example 1: Preparation of Emulsion (A-1) of Liquid NBR (1)

To 75 g of the liquid NBR (1), 75 g of adipic acid ester (product name "ADEKA CIZER PN-7160", vapor pressure = $1 \times 10^{-7}$ Pa or less, ADEKA Corporation) as an oil was added and stirred until the mixture was homogeneous.
Furthermore, 9 g of a nonionic surfactant (HLB value = 13.8, product name "ADEKA TOL TN100", ADEKA Corporation) was added and stirred for 5 minutes.
Subsequently, 341 g of 0.06 mol/L sodium hydroxide aqueous solution was added in small portions with stirring, to provide an emulsion (A-1) of the mixture of the liquid NBR and the oil.

Preparative Example 2: Preparation of Emulsion (A-2) of Liquid NBR (2)

To 75 g of the liquid NBR (2), 75 g of adipic acid ester (product name "ADEKA CIZER PN-7160", vapor pressure = $1 \times 10^{-7}$ Pa or less, ADEKA Corporation) as an oil was added and stirred until the mixture was homogeneous.
Furthermore, 9 g of a nonionic surfactant (HLB value = 13.8, product name "ADEKA TOL TN100", ADEKA Corporation) was added and stirred for 5 minutes.
Subsequently, 341 g of 0.06 mol/L sodium hydroxide aqueous solution was added in small portions with stirring, to provide an emulsion (A-2) of the mixture of the liquid NBR and the oil.

Preparative Example 3: Preparation of Emulsion (A-3) of Liquid IR

To 50 g of the liquid IR, 100 g of triglyceride 2-ethylhexanoate (product name "EXCEBARL TGO", vapor pressure = $1 \times 10^{-7}$ Pa or less, produced by Kao Corporation) as an oil was added and stirred until the mixture was homogeneous.
Furthermore, 9 g of a nonionic surfactant (HLB value = 12.4, product name "ADEKA TOL PC-8", ADEKA Corporation) was added and stirred for 5 minutes.
Subsequently, 341 g of 0.06 mol/L sodium hydroxide aqueous solution was added in small portions with stirring, to provide an emulsion (A-3) of the mixture of the liquid IR and the oil.

Preparative Example 4: Preparation of Emulsion (A-4) of Liquid IR

To 150 g of the liquid IR, 9 g of a nonionic surfactant (HLB value = 12.4, product name "ADEKA TOL PC-8", ADEKA Corporation) was added and stirred for 5 minutes.
Subsequently, 341 g of 0.06 mol/L sodium hydroxide aqueous solution was added in small portions with stirring, to provide an emulsion (A-4) of the mixture of the liquid IR and the oil.

<Example 1>

A crosslinking agent (B) was prepared so as to have a composition shown in Table 2, and mixed with the emulsion (A-1) prepared by the method described above, to prepare an aqueous adhesive.
Subsequently, polyvinyl alcohol (PVA) fibers (product name "KURALON 1239", total fineness: 1,330 dtex, single fiber fineness: 6.65 dtex, KURARAY CO., LTD.) were immersed in the resulting aqueous adhesive, and then squeezed with a roller.

After that, the resulting fibers were subjected to a drying treatment at 115°C for 30 seconds, subjected to a heat treatment at 150°C for 30 seconds, and wound, to produce PVA fibers having an adhesive layer formed from the aqueous adhesive (PVA fibers having an adhesive layer on the surface of the fibers). The PVA fibers were twined at a number of twist of 80 T/m, to produce reinforcing fibers (fiber code).

As an isocyanate resin, "MEIKANATE SU-268A" produced by MEISEI CHEMICAL WORKS, LTD. was used. As an epoxy resin, "DENACOL EX-512" produced by Nagase ChemteX Corporation was used.

For the aqueous adhesive obtained in Example 1, the content of the organic solvent and the viscosity at 25°C were measured by the following methods. For aqueous adhesives obtained in Examples 2, 3, 5, 7, and 8 and Comparative Examples 1 and 2, the measurements were performed similarly. Results are shown in Table 2.

[Content of Organic Solvent in Aqueous Adhesive]

The content of the organic solvent in the aqueous adhesive was analyzed by gas chromatography (GC-14B produced by SHIMADZU CORPORATION; column: G-100 produced by the Chemicals Inspection & Testing Institute).

[Viscosity at 25°C of Aqueous Adhesive]

The viscosity at 25°C of the resulting aqueous adhesive was measured with a Brookfield viscometer (B type viscometer). The rotor and rotational speed in the measurement were set so as to be closer to the full scale thereof. Results are shown in Table 2.

<Examples 2 to 6 and Comparative Examples 1 to 3>

Reinforcing fibers were produced in the same manner as in Example 1 except that the composition of each aqueous adhesive was changed in accordance with the description of Table 2.

In Comparative Example 3, an aqueous adhesive was prepared without using a surfactant (without preparing an oil-in-water emulsion (A)) in accordance with the blending shown in Table 2.

<Examples 7 and 8>

Reinforcing fibers were produced in the same manner as in Example 4 except that nylon 6 fibers (total fineness: 1,400 dtex, single fiber fineness: 6.86 dtex) as polyamide fibers or PET fibers (total fineness: 1,440 dtex, single fiber fineness: 7.20 dtex) as polyester-based fibers were used instead of the PVA fibers.

Table 2

| | | Blending of aqueous adhesive (part by mass) | | | | | | | | | Viscosity at 25°C of aqueous adhesive (mPa·s) | Content of organic solvent (% by mass) |
| | | Oil-in-water emulsion (A) | | | | | | Aqueous solution or aqueous dispersion (B) of crosslinking agent | | | | |
| | | Kind of oil-in-water emulsion (A) | Water | Liquid conjugated diene-based rubber | | Oil | | Surfactant | Water | Isocyanate resin | Epoxy resin | | |
| | | | | Liquid NBR | Liquid IR | Adipic acid ester | Triglyceride 2-ethylhexanoate | Nonionic surfactant | | | | | |
| Example | 1 | A-1 | 6.18 | 1.25 | - | 1.25 | - | 0.15 | 88.68 | 1.79 | 0.70 | 9.1 | 0.60 |
| | 2 | A-1 | 9.89 | 2.00 | - | 2.00 | - | 0.24 | 84.87 | 0.72 | 0.28 | 13.5 | 0.24 |
| | 3 | A-1 | 2.47 | 0.50 | - | 0.50 | - | 0.06 | 92.48 | 2.87 | 1.12 | 8.9 | 0.96 |
| | 4 | A-2 | 6.18 | 1.25 | - | 1.25 | - | 0.15 | 88.68 | 1.79 | 0.70 | - | 0.60 |
| | 5 | A-3 | 11.39 | - | 1.33 | - | 2.67 | 0.24 | 83.38 | 0.72 | 0.28 | 11.3 | 0.24 |
| | 6 | A-4 | 11.39 | - | 4.00 | - | - | 0.24 | 83.38 | 0.72 | 0.28 | - | 0.24 |
| | 7 | A-3 | 11.39 | - | 1.33 | - | 2.67 | 0.24 | 83.38 | 0.72 | 0.28 | 11.3 | 0.24 |
| | 8 | A-3 | 11.39 | - | 1.33 | - | 2.67 | 0.24 | 83.38 | 0.72 | 0.28 | 11.3 | 0.24 |
| Comparative Example | 1 | A-1 | 12.37 | 2.50 | - | 2.50 | - | 0.30 | 82.33 | - | - | 16.4 | 0.00 |
| | 2 | A-3 | 12.37 | - | 1.67 | - | 3.33 | 0.30 | 82.33 | - | - | 12.8 | 0.00 |
| | 3 | - | 2.53 | 0.50 | - | 0.50 | - | 0.00 | 92.48 | 2.87 | 1.12 | - | 0.96 |

<Amount (part by mass) of Aqueous Adhesive Attached per 100 parts by mass of Fibers>

The fibers before attachment of the aqueous adhesive were sampled so as to have a predetermined length, and then treated at 105°C for 4 hours, and the mass of the fibers was measured.

Subsequently, the fibers treated with the aqueous adhesive were sampled so as to have the same length, and then treated at 105°C for 4 hours, similarly, and the mass of the fibers was measured.

The amount of the aqueous adhesive attached per 100 parts by mass of the fibers was calculated by [mass after treatment - mass before treatment] × 100/[mass before treatment].

In Table 2, the content (% by mass) of each component in the aqueous adhesive was calculated from the solid content mass ratio in the adhesive component.

<Measurement of Rubber Adhesion Force>

From the reinforcing fibers obtained in each of Examples 1 to 8 and Comparative Examples 1 to 3, a sheet for evaluation was prepared by the following method. Subsequently, the force (N/25.4 mm) required for T-peeling of the reinforcing fibers from the rubber was measured and then evaluated as the rubber adhesion force. Results are shown in Table 3.

In the evaluation results of the rubber adhesion force, a larger value means a larger adhesion force to the reinforcing fibers and the rubber. The sheet for evaluation was prepared as follows.

Preparation of Sheet for Evaluation

The reinforcing fibers produced in each of Examples 1 to 3 and 6 and Comparative Examples 1 and 3 were parallelly arranged on a masking tape such that the reinforcing fibers were not superposed, and fixed, and the fixed reinforcing fibers and a unvulcanized rubber composition NBR (hereinafter also referred to as "NBR unvulcanized rubber") (width: 25.4 mm, length: 240 mm) containing as a main component NBR prepared separately using NBR ("JSR N230S" produced by JSR Corporation) according to the following blending composition were superposed with each other (the length of the portion in which the reinforcing fibers and the NBR unvulcanized rubber were superposed was 190 mm). Subsequently, the assembly was press-vulcanized under a condition of 150°C and a pressure of 20 kg/cm$^2$ for 30 minutes to produce a sheet for evaluation.

In Examples 4, 5, 7, and 8, and Comparative Example 2, a sheet for evaluation was produced in the same manner as in Example 1 except that a NR/SBR unvulcanized rubber was used instead of a NBR unvulcanized rubber.

(Blending Composition of NBR Unvulcanized Rubber)

NBR: 100 parts by mass
Filler (carbon black): 70 parts by mass
Softening agent (adipic acid ether ester-based): 20 parts by mass
Crosslinking agent (sulfur powder): 0.7 parts by mass
Vulcanization aid (zinc oxide and stearic acid): 5 parts by mass
Vulcanization accelerator (sulfenamide-based and thiazole-based): 3.0 parts by mass
Inorganic additive (kaolin clay and calcium carbonate): 21 parts by mass

(Blending Composition of NR/SBR Unvulcanized Rubber)

NR: 50 parts by mass
SBR: 50 parts by mass
Filler (carbon black): 45 parts by mass
Softening agent (paraffin-based process oil): 5 parts by mass
Crosslinking agent (sulfur powder): 2.4 parts by mass
Vulcanization aid (two kinds of zinc oxides and stearic acid): 7 parts by mass
Vulcanization accelerator (thiazole-based and thiuram-based): 2.0 parts by mass

<Process Contamination>

In Examples 1 to 8 and Comparative Examples 1 to 3, a mixed solution was applied to the fibers as described in each example, and the reinforcing fibers in an amount of 5 kg were wound. The degree (gumming up) of contamination of a holding roller through which the reinforcing fibers were passed was determined in accordance with the following evaluation criteria.

Criteria

G (good): There was no roller contamination by gumming up, or there was little roller contamination by gumming up and there was no problem with spinning operation.
N (normal): Although roller contamination by gumming up was seen, there was no severe problem with spinning operation.
B (bad): Roller contamination by gumming up is remarkable, during spinning, single yarns were taken and wound, and there was a problem with spinning operation.

Table 3

| | | Characteristics of aqueous adhesive | | | Kind of fibers | Amount (part by mass) of aqueous adhesive attached (*1) | Kind of rubber | Evaluation | |
|---|---|---|---|---|---|---|---|---|---|
| | | Kind of oil-in-water emulsion (A) | Surfactant | Crosslinking agent | | | | Adhesion force (N/ 25.4 mm) | Process contamination |
| Example | 1 | A-1 | Contained | Contained | PVA | 2.0 | NBR | 36 | G |
| | 2 | A-1 | | | PVA | 2.1 | NBR | 33 | G |
| | 3 | A-1 | | | PVA | 1.9 | NBR | 36 | N |
| | 4 | A-2 | | | PVA | 2.1 | NR/SBR | 40 | G |
| | 5 | A-3 | | | PVA | 2.3 | NR/SBR | 48 | N |
| | 6 | A-4 | | | PVA | 2.0 | NBR | 36 | G |
| | 7 | A-3 | | | Nylon 6 | 2.2 | NR/SBR | 50 | G |
| | 8 | A-3 | | | PET | 2.1 | NR/SBR | 31 | G |
| Comparative Example | 1 | A-1 | Contained | Not contained | PVA | 2.0 | NBR | 14 | G |
| | 2 | A-3 | | | PVA | 1.9 | NR/SBR | 9 | G |
| | 3 | - | Not contained | Contained | PVA | 3.7 | NBR | 16 | B |
| * 1: amount (part by mass) of aqueous adhesive attached per 100 parts by mass of fibers | | | | | | | | | |

As apparent from the results of Examples and Comparative Examples, the present invention can provide an aqueous adhesive that is excellent in adhesiveness to fibers and rubber. In particular, according to the present invention, fibers and rubber can be firmly adhered without using resorcinol and formaldehyde.

**Claims**

1. An aqueous adhesive for adhesion between fibers and an elastomer, the aqueous adhesive comprising:

an oil-in-water emulsion (A) containing a liquid conjugated diene-based rubber and a surfactant; and
an aqueous solution or aqueous dispersion (B) of a crosslinking agent.

2. The aqueous adhesive according to claim 1, wherein a melt viscosity measured at 38°C of the liquid conjugated diene-based rubber is 4,000 Pa·s or less.

3. The aqueous adhesive according to claim 1 or 2, further comprising an oil having a vapor pressure at 20°C of 10 Pa or less.

4. The aqueous adhesive according to claim 3, wherein the oil is contained in the oil-in-water emulsion (A).

5. The aqueous adhesive according to any one of claims 1 to 4, wherein the crosslinking agent is at least one kind selected from an epoxy resin and an isocyanate resin.

6. The aqueous adhesive according to any one of claims 1 to 5, wherein a content of an organic solvent in the aqueous adhesive is less than 1.0% by mass.

7. Reinforcing fibers in which the aqueous adhesive according to any one of claims 1 to 6 are attached to fibers.

8. The reinforcing fibers according to claim 7, wherein the fibers are at least one kind of fibers selected from polyamide-based fibers, polyvinyl alcohol-based fibers, polyester-based fibers, and regenerated cellulose-based fibers.

9. The reinforcing fibers according to claim 7 or 8, wherein an amount of the aqueous adhesive attached to the fibers is 0.01 to 10 parts by mass per 100 parts by mass of the fibers used as a raw material.

10. An elastomer product using the reinforcing fibers according to any one of claims 7 to 9.

11. The elastomer product according to claim 10, wherein the elastomer product is a tire, a belt, or a hose.

## INTERNATIONAL SEARCH REPORT

| International application No. |
|---|
| **PCT/JP2022/042148** |

### A. CLASSIFICATION OF SUBJECT MATTER

***D06M 15/693***(2006.01)i; ***B60C 9/00***(2006.01)i; ***C09J 11/06***(2006.01)i; ***C09J 109/00***(2006.01)i; ***D06M 13/17***(2006.01)i; ***D06M 13/395***(2006.01)i; ***D06M 15/55***(2006.01)i

FI: D06M15/693; B60C9/00 A; C09J11/06; C09J109/00; D06M13/17; D06M13/395; D06M15/55

According to International Patent Classification (IPC) or to both national classification and IPC

### B. FIELDS SEARCHED

Minimum documentation searched (classification system followed by classification symbols)

D06M15/693; B60C9/00; C09J11/06; C09J109/00; D06M13/17; D06M13/395; D06M15/55

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 5-287681 A (TEIJIN LTD.) 02 November 1993 (1993-11-02) | 1-11 |
| A | JP 2011-26743 A (TORAY INDUSTRIES, INC.) 10 February 2011 (2011-02-10) | 1-11 |
| A | WO 2019/230700 A1 (KURARAY CO., LTD.) 05 December 2019 (2019-12-05) | 1-11 |
| A | WO 2020/175404 A1 (KURARAY CO., LTD.) 03 September 2020 (2020-09-03) | 1-11 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/042148**

| Patent document cited in search report | | | Publication date (day/month/year) | Patent family member(s) | | | Publication date (day/month/year) |
|---|---|---|---|---|---|---|---|
| JP | 5-287681 | A | 02 November 1993 | (Family: none) | | | |
| JP | 2011-26743 | A | 10 February 2011 | (Family: none) | | | |
| WO | 2019/230700 | A1 | 05 December 2019 | US | 2021/0222036 | A1 | |
| | | | | EP | 3805451 | A1 | |
| | | | | CN | 112204192 | A | |
| | | | | KR | 10-2021-0014107 | A | |
| WO | 2020/175404 | A1 | 03 September 2020 | US | 2022/0049062 | A1 | |
| | | | | EP | 3933101 | A1 | |
| | | | | CN | 113454282 | A | |
| | | | | KR | 10-2021-0129076 | A | |

Form PCT/ISA/210 (patent family annex) (January 2015)

**EP 4 435 174 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 54004976 A
- JP 58002370 A
- WO 2019230700 A
- JP 2016502610 T